# EUROPEAN PATENT APPLICATION

(11) **EP 4 243 125 A1**
(43) Date of publication of application: **13.09.2023**
(21) Application number: 22899634.4
(22) Date of filing: 14.01.2022
(51) Int. Cl.: H01M 4/62, H01M 4/13, H01M 4/139

(54) **POSITIVE ELECTRODE COMPOSITE MATERIAL FOR LITHIUM ION SECONDARY BATTERY, POSITIVE ELECTRODE AND BATTERY**

(71) Applicant: Contemporary Amperex Technology Co., Limited, Ningde City, Fujian 352100 (CN)
(72) Inventor: LI, Zhenhua, Ningde City, Fujian 352100 (CN); WU, Xiayi, Ningde City, Fujian 352100 (CN); XU, Jiawei, Ningde City, Fujian 352100 (CN); YANG, Ziyu, Ningde City, Fujian 352100 (CN); FU, Hanli, Ningde City, Fujian 352100 (CN); XU, Shuoyan, Ningde City, Fujian 352100 (CN); LI, Xing, Ningde City, Fujian 352100 (CN); NIU, Shaojun, Ningde City, Fujian 352100 (CN)
(74) Representative: Jacob, Reuben Ellis
(86) International application number: PCT/CN2022/072029
(87) International publication number: WO 2023/133805

(57) **Abstract**

The present application provides a positive electrode composite material for a lithium ion secondary battery, and a positive electrode using the positive electrode composite material for a lithium ion secondary battery, a lithium ion secondary battery and a power consuming device. The positive electrode composite material for a lithium ion secondary battery comprises a positive electrode active material and an alkali metal oxide as shown by formula AₘGOₙ, wherein A represents at least one element selected from Na and K and optionally Li, G represents at least one element selected from Fe, Ni, Co, Mn, Ru, Ir, Sn, Cr, Nb, Mo, V and Ti, m is 1 - 6, and n is 1 - 4.

## Description

### Technical Field

The present application relates to the technical field of batteries, and in particular, to a positive electrode composite material for a lithium ion secondary battery, a positive electrode using the positive electrode composite material for a lithium ion secondary battery, a lithium ion secondary battery, and a power consuming device.

### Background Art

In recent years, with the increasing application range, lithium ion secondary batteries are widely used in energy storage power systems such as hydraulic power, thermal power, wind power and solar power stations, as well as many fields such as electric tools, electric bicycles, electric motorcycles, electric vehicles, military equipment, and aerospace. Due to the great development of the lithium ion secondary batteries, higher requirements have also been placed on the lithium ion secondary batteries in terms of energy density, cycling performance, cell life, safety performance, etc.

The operation of the lithium ion secondary battery cell mainly relies on the movement of lithium ions between the positive electrode and the negative electrode. During the charging/discharging process, the lithium ions move back and forth and intercalated and deintercalated between the two electrodes; during the charging, the lithium ions are deintercalated from the positive electrode, pass through the electrolyte and are intercalated into the negative electrode, such that the negative electrode is in a lithium-rich state, and this is opposite during the discharging.

Based on this working mechanism of lithium ion secondary batteries, during the use, the negative electrode material (for example, graphite) continuously expands/contracts as lithium ions are intercalated/deintercalated during the charging/discharging, which results in continuous destruction/repair of the solid electrolyte interface film (hereinafter sometimes referred to as an SEI film), leading to the thickening of the by-products, resulting in expansion. The continuous expansion/contraction of the negative electrode material with the intercalation/deintercalation of lithium ions results in a reduction in bonding force between particles, resulting in particle rearrangement causing an increase in negative electrode thickness, leading to an increasing expansion force of the lithium ion secondary battery during the use. Once exceeding the expansion force threshold of the chemical system, the expansion force may lead to the accelerated decay of the cell cycle, which fails to meet the quality assurance requirements or even thermal runaway. Therefore, there is still a need to improve the structure of the existing battery.

### Summary of the Invention

In view of the above-mentioned problems, the present application is carried out with an object to provide a positive electrode composite material for a lithium ion secondary battery, which is capable of reducing or eliminating destruction of the SEI film caused by deformation of the negative electrode material, reducing side reactions, and reducing cell expansion force, thereby improving the cell life and enhancing the safety performance.

In order to achieve the above object, in a first aspect, the present application provides a positive electrode composite material for a lithium ion secondary battery comprising a positive electrode active material and an alkali metal oxide as shown by formula AₘGOₙ, wherein A represents at least one element selected from Na and K and optionally Li, G represents at least one element selected from Fe, Ni, Co, Mn, Ru, Ir, Sn, Cr, Nb, Mo, V and Ti, m is 1 - 6, and n is 1 - 4.

By comprising the alkali metal oxide as shown by formula AₘGOₙ in the positive electrode composite material, the Na ions and/or K ions of a larger ionic radius are used to open the negative electrode material, reduce or eliminate the expansion/contraction deformation of the negative electrode material due to the repeated intercalation/deintercalation of the lithium ions of a smaller ionic radius in the negative electrode material, reduce or eliminate the destruction of the SEI film caused by the deformation of the negative electrode material, reduce the side reactions and reduce the expansion force of the cell, thereby improving the cell life and enhancing the safety performance.

In any embodiment, the alkali metal oxide is selected from at least one of Na₆FeO₄, K₆FeO₄, Na₆CoO₄, K₆CoO₄, Li₂Na₄FeO₄ and Li₂K₄FeO₄. By using these compounds as the alkali metal oxide as shown by formula AₘGOₙ, the Na ions and/or K ions can be reliably used to open the negative electrode material, thus achieving the above technical effects.

In any embodiment, relative to a total of 100 wt% of the positive electrode active material and the alkali metal oxide, the alkali metal oxide has a content of 0.1 wt% - 10 wt%, preferably 0.5 wt% - 4 wt%. By allowing the alkali metal oxide to be higher than 0.1 wt%, sufficient amounts of ions of Na, K, etc., are embedded into the negative electrode, such that the negative electrode material is well opened, which has an excellent effect in terms of cycling and expansion. Moreover, by allowing the alkali metal oxide to be less than 10 wt%, no large initial expansion of the negative electrode due to a large amount of ions of Na, K, etc., being embedded in the negative electrode occurs, and no more space is to be left inside the cell to absorb the expansion, and thus the energy density of the battery is high.

In a second aspect, the present application also provides a positive electrode for a lithium ion secondary battery, comprising a positive electrode composite material for a lithium ion secondary battery in the first aspect of the present application. The present application can provide a lithium ion secondary battery with a high energy density, a long cell life and safety performance.

In a third aspect, the present application also provides a positive electrode for a lithium ion secondary battery, comprising: a positive electrode current collector, a positive electrode active material layer comprising a positive electrode active material, and an alkali metal oxide layer comprising an alkali metal oxide, wherein the alkali metal oxide is shown by formula AₘGOₙ, wherein A represents at least one element selected from Na and K and optionally Li, G represents at least one element selected from Fe, Ni, Co, Mn, Ru, Ir, Sn, Cr, Nb, Mo, V and Ti, m is 1 - 6, and n is 1 - 4.

By comprising the alkali metal oxide layer comprising the alkali metal oxide in the positive electrode, the Na ions and/or K ions of a larger ionic radius can be used to open the negative electrode material, reduce or eliminate the expansion/contraction deformation of the negative electrode material due to the repeated intercalation/deintercalation of the lithium ions of a smaller ionic radius in the negative electrode material, reduce or eliminate the destruction of the SEI film caused by the deformation of the negative electrode material, reduce the side reactions and reduce the expansion force of the cell, thereby improving the cell life and enhancing the safety performance.

In any embodiment, the alkali metal oxide is selected from at least one of Na₆FeO₄, K₆FeO₄, Na₆CoO₄, K₆CoO₄, Li₂Na₄FeO₄ and Li₂K₄FeO₄. By using these compounds as the alkali metal oxide as shown by formula AₘGOₙ, the Na ions and/or K ions can be reliably used to open the negative electrode material, thus achieving the above technical effects.

In any embodiment, the alkali metal oxide layer is disposed between the positive electrode current collector and the positive electrode active material layer, or on the positive electrode active material layer. The arrangement of such a layer structure can well achieve the above-mentioned technical effects and does not impede the movement of lithium ions between the positive electrode and the negative electrode.

In any embodiment, relative to a total of 100 wt% of the positive electrode active material comprised in the positive electrode active material layer and the alkali metal oxide comprised in the alkali metal oxide layer, the alkali metal oxide has a content of 0.1wt% - 10wt%, preferably 0.5wt% - 4wt%. By allowing the alkali metal oxide to be higher than 0.1 wt%, sufficient amounts of ions of Na, K, etc., are embedded into the negative electrode, such that the negative electrode material is well opened, which has an excellent effect in terms of cycling and expansion. Moreover, by allowing the alkali metal oxide to be less than 10 wt%, no increased initial expansion of the negative electrode due to a large amount of ions of Na, K, etc., being embedded in the negative electrode occurs, and no more space is to be left inside the cell to absorb the expansion, and thus the energy density of the battery is high.

In a fourth aspect, the present application also provides a lithium ion secondary battery, comprising a positive electrode in the second aspect or the third aspect of the present application and a negative electrode.

In any embodiment, the negative electrode comprises a negative electrode active material, the negative electrode active material comprising at least one selected from a carbon material, a metal or nonmetal compound and a coating of the compound and a dopant of the compound. By using these substances as a negative electrode active material for a lithium ion secondary battery, the Na ions and/or K ions comprised in the alkali metal oxide can be reliably used to open the negative electrode material, thus achieving the above technical effects.

In any embodiment, the carbon material comprises at least one selected from graphite, hard carbon and soft carbon, the metal or nonmetal compound comprises at least one selected from oxides, sulphides, selenides and fluorides of silicon, selenium, sulphur, phosphorus, tin, titanium or vanadium, the coating of the compound comprises: a coating obtained by coating the metal or nonmetal compound with graphite, soft carbon or hard carbon, and the dopant of the compound comprises: a dopant obtained by doping the metal or nonmetal compound with at least one element selected from Mg, Ni, Co, and Mn. By using these substances as a negative electrode active material for a lithium ion secondary battery, the Na ions and/or K ions can be more reliably used to open the negative electrode material, thus achieving the above technical effects.

In any embodiment, the metal or nonmetal compound comprises at least one selected from SiO₂, SiO, SnO₂, TiO₂, SiS₂ and TiS₂. By using these substances as a negative electrode active material for a lithium ion secondary battery, the Na ions and/or K ions can be more reliably used to open the negative electrode material, thus achieving the above technical effects.

In a fifth aspect, the present application also provides a power consuming device, comprising a secondary battery in the fourth aspect of the present application. The power consuming device comprises the secondary battery, and thus has all the beneficial effects of the secondary battery.

### Brief Description of the Drawings

Fig. 1 is a schematic diagram of a secondary battery according to an embodiment of the present application.
Fig. 2 is an exploded view of a secondary battery according to an embodiment of the present application as shown in Fig. 1.
Fig. 3 is a schematic diagram of a battery module according to an embodiment of the present application.
Fig. 4 is a schematic diagram of a battery pack according to an embodiment of the present application.
Fig. 5 is an exploded view of a battery pack according to an embodiment of the present application as shown in Fig. 4.
Fig. 6 is a schematic diagram of a power consuming device using a secondary battery according to an embodiment of the present application as a power source.

### List of reference signs:

1 : battery pack; 2 : upper case body; 3 : lower case body; 4 : battery module; 5 : secondary battery; 51 : a housing; 52 : an electrode assembly; 53 : top cover assembly.

### Detailed Description of Embodiments

Hereafter, embodiments of a positive electrode composite material for a lithium ion secondary battery, a positive electrode using the positive electrode composite material for a lithium ion secondary battery, a lithium ion secondary battery and a power consuming device of the present application are specifically disclosed in the detailed description with reference to the accompanying drawings as appropriate. However, unnecessary detailed illustrations may be omitted in some instances. For example, there are situations where detailed description of well known items and repeated description of actually identical structures are omitted. This is to prevent the following description from being unnecessarily verbose, and facilitates understanding by those skilled in the art. Moreover, the accompanying drawings and the descriptions below are provided for enabling those skilled in the art to fully understand the present application, rather than limiting the subject matter disclosed in claims.

"Ranges" disclosed in the present application are defined in the form of lower and upper limits, and a given range is defined by selection of a lower limit and an upper limit, the selected lower and upper limits defining the boundaries of the particular range. Ranges defined in this manner may be inclusive or exclusive, and may be arbitrarily combined, that is, any lower limit may be combined with any upper limit to form a range. For example, if the ranges of 60 to 120 and 80 to 110 are listed for a particular parameter, it should be understood that the ranges of 60 to 110 and 80 to 120 are also contemplated. Additionally, if minimum range values 1 and 2 are listed, and maximum range values 3, 4, and 5 are listed, the following ranges are all contemplated: 1 to 3, 1 to 4, 1 to 5, 2 to 3, 2 to 4 and 2 to 5. In the present application, unless stated otherwise, the numerical range "a to b" denotes an abbreviated representation of any combination of real numbers between a and b, where both a and b are real numbers. For example, the numerical range "0 to 5" means that all real numbers between "0 to 5" have been listed herein, and "0 to 5" is just an abbreviated representation of combinations of these numerical values. In addition, when a parameter is expressed as an integer of ≥ 2, it is equivalent to disclosing that the parameter is, for example, an integer of 2, 3, 4, 5, 6, 7, 8, 9, 10, 11, 12, and the like.

All the embodiments and optional embodiments of the present application can be combined with one another to form new technical solutions, unless otherwise stated.

All technical features and optional technical features of the present application can be combined with one another to form a new technical solution, unless otherwise stated.

Unless otherwise stated, all the steps of the present application can be performed sequentially or randomly, preferably sequentially. For example, the method including steps (a) and (b) indicates that the method may include steps (a) and (b) performed sequentially, and may also include steps (b) and (a) performed sequentially. For example, reference to "the method may further include step (c)" indicates that step (c) may be added to the method in any order, e.g., the method may include steps (a), (b) and (c), or steps (a), (c) and (b), or steps (c), (a) and (b), etc.

The terms "comprise" and "include" mentioned in the present application are open-ended or closed-ended, unless otherwise stated. For example, the terms "comprising" and "including" may mean that other components not listed may also be comprised or included, or only the listed components may be comprised or included.

In the present application, the term "or" is inclusive unless otherwise specified. For example, the phrase "A or B" means "A, B, or both A and B." More specifically, a condition "A or B" is satisfied by any one of the following: A is true (or present) and B is false (or not present); A is false (or not present) and B is true (or present); or both A and B are true (or present).

In an embodiment of the present application, provided is a positive electrode composite material for a lithium ion secondary battery comprising a positive electrode active material and an alkali metal oxide as shown by formula AₘGOₙ, wherein A represents at least one element selected from Na and K and optionally Li, G represents at least one element selected from Fe, Ni, Co, Mn, Ru, Ir, Sn, Cr, Nb, Mo, V and Ti, m is 1 - 6, and n is 1 - 4. Herein, the alkali metal oxides as shown by formula AₘGOₙ can be used alone or in a combination of two or more thereof.

The inventors of the present application have discovered that during the use of the lithium ion secondary battery, with the lithium ions in the positive electrode active material being intercalated/deintercalated in the negative electrode material (for example, graphite), the negative electrode material undergoes continuous expansion/contraction, resulting in the continuous destruction/repair of the SEI film during the charging/discharging process, leading to expansion due to the thickening of the by-products. The continuous expansion/contraction of the negative electrode material with the intercalation/deintercalation of lithium ions results in a reduction in bonding force between particles, resulting in particle rearrangement causing an increase in negative electrode thickness, leading to an increasing expansion force of the lithium ion secondary battery during the use. This increase in expansion force leads to accelerated decay of the cell cycling and poor safety performance.

By comprising the alkali metal oxide as shown by formula AₘGOₙ in the positive electrode composite material, the Na ions and/or K ions of a larger ionic radius are used to open the negative electrode material, reduce or eliminate the expansion/contraction deformation of the negative electrode material due to the repeated intercalation/deintercalation of the lithium ions of a smaller ionic radius in the negative electrode material, reduce or eliminate the destruction of the SEI film caused by the deformation of the negative electrode material, reduce the side reactions and reduce the expansion force of the cell, thereby improving the life of the cell and enhancing the safety performance and effective solving the above problems.

In some embodiments, the alkali metal oxide can be selected from at least one of Na₆FeO₄, K₆FeO₄, Na₆CoO₄, K₆CoO₄, Li₂Na₄FeO₄ and Li₂K₄FeO₄. When these compounds are comprised in the positive electrode composite material, the Na ions and/or K ions can be more reliably used to open the negative electrode material, thus achieving the above technical effects.

In some embodiments, relative to a total of 100 wt% of the positive electrode active material and the alkali metal oxide, the alkali metal oxide has a content of 0.1 wt% - 10 wt%, preferably 0.5 wt% - 4 wt%. When the alkali metal oxide is less than 0.1 wt%, small amounts of ions of Na, K, etc., are embedded into the negative electrode, such that the negative electrode material can not be well opened, which has a smaller effect in terms of cycling and expansion. When the alkali metal oxide has a percentage higher than 10 wt%, a large amount of ions of Na, K, etc., are embedded in the negative electrode, leading to a large initial expansion of the negative electrode, and more space is to be left inside the cell to absorb the expansion, and thus the energy density of the battery is reduced.

The positive electrode for a lithium ion secondary battery of the present application comprises the positive electrode composite material for a lithium ion secondary battery.

In addition, the present application is not limited to the composition of the positive electrode formed by comprising both the alkali metal oxide and the positive electrode active material in the positive electrode composite material, and the alkali metal oxide, as a separate alkali metal oxide layer comprising an alkali metal oxide, also can form the positive electrode together with a positive electrode current collector, a positive electrode active material layer comprising a positive electrode active material.

That is, the present application also provides a positive electrode for a lithium ion secondary battery, comprising: a positive electrode current collector, a positive electrode active material layer comprising a positive electrode active material, and an alkali metal oxide layer comprising an alkali metal oxide, wherein the alkali metal oxide is shown by formula AₘGOₙ, wherein A represents at least one element selected from Na and K and optionally Li, G represents at least one element selected from Fe, Ni, Co, Mn, Ru, Ir, Sn, Cr, Nb, Mo, V and Ti, m is 1 - 6, and n is 1 - 4.

By having such a layer structure, the Na ions and/or K ions of a larger ionic radius can also be used to open the negative electrode material, reduce or eliminate the expansion/contraction deformation of the negative electrode material due to the repeated intercalation/deintercalation of the lithium ions of a smaller ionic radius in the negative electrode material, reduce or eliminate the destruction of the SEI film caused by the deformation of the negative electrode material, reduce the side reactions and reduce the expansion force of the cell, thereby improving the life of the cell and enhancing the safety performance.

In some embodiments, the alkali metal oxide can be selected from at least one of Na₆FeO₄, K₆FeO₄, Na₆CoO₄, K₆CoO₄, Li₂Na₄FeO₄ and Li₂K₄FeO₄. When these compounds are comprised in the positive electrode composite material, the Na ions and/or K ions can be more reliably used to open the negative electrode material, thus achieving the above technical effects.

In some embodiments, the alkali metal oxide layer can be disposed between the positive electrode current collector and the positive electrode active material layer, or on the positive electrode active material layer. The formation of such a layer structure can better achieve the above-mentioned effects and does not impede the movement of lithium ions between the positive electrode and the negative electrode.

In some embodiments, relative to a total of 100 wt% of the positive electrode active material comprised in the positive electrode active material layer and the alkali metal oxide comprised in the alkali metal oxide layer, the alkali metal oxide has a content of 0.1 wt% - 10 wt%, preferably0.5 wt% - 4 wt%. When the alkali metal oxide is less than 0.1 wt%, small amounts of ions of Na, K, etc., are embedded into the negative electrode, such that the negative electrode material can not be well opened, which has a smaller effect in terms of cycling and expansion. When the alkali metal oxide has a percentage higher than 10 wt%, a large amount of ions of Na, K, etc., are embedded in the negative electrode, leading to a large initial expansion of the negative electrode, and more space is to be left inside the cell to absorb the expansion, and thus the energy density of the battery is reduced.

The lithium ion secondary battery of the present application comprises a positive electrode comprising the positive electrode composite material or a positive electrode having the layer structure, and a negative electrode.

In some embodiments, the negative electrode comprises a negative electrode active material, the negative electrode active material comprising at least one selected from a carbon material, a metal or nonmetal compound and a coating of the compound and a dopant of the compound.

In some embodiments, the carbon material comprises at least one selected from graphite, hard carbon and soft carbon, the metal or nonmetal compound comprises at least one selected from oxides, sulphides, selenides and fluorides of silicon, selenium, sulphur, phosphorus, tin, titanium or vanadium, the coating of the compound comprises: a coating obtained by coating the metal or nonmetal compound with graphite, soft carbon or hard carbon, and the dopant of the compound comprises: a dopant obtained by doping the metal or nonmetal compound with at least one element selected from Mg, Ni, Co, and Mn. In some embodiments, the metal or nonmetal compound comprises at least one selected from SiO₂, SiO, SnO₂, TiO₂, SiS₂ and TiS₂.

By using these substances as a negative electrode active material for a lithium ion secondary battery, the Na ions and/or K ions can be more reliably used to open the negative electrode material, thus achieving the above technical effects.

The power consuming device of the present application comprises the lithium ion secondary battery.

In addition, the lithium ion secondary battery, battery module, battery pack, and power consuming device of the present application will be described below by appropriately referring to the accompanying drawings.

In an embodiment of the present application, a lithium ion secondary battery is provided.

The lithium ion secondary battery comprises a positive electrode plate, a negative electrode plate, an electrolyte and a separator. During a charging/discharging process of the battery, the lithium ions move back and forth and are intercalated and deintercalated between a positive electrode plate and a negative electrode plate. The electrolyte is between the positive electrode plate and the negative electrode plate and functions for conducting ions. The separator is provided between the positive electrode plate and the negative electrode plate, and mainly prevents the positive and negative electrodes from short-circuiting and enables ions to pass through.

### [Positive electrode plate]

In some embodiments, the positive electrode plate comprises a positive electrode current collector and a positive electrode composite material layer provided on at least one surface of the positive electrode current collector.

As an example, the positive electrode current collector has two surfaces opposite in its own thickness direction, and the positive electrode composite material layer is provided on either or both of the two opposite surfaces of the positive electrode current collector.

In some embodiments, the positive electrode current collector can be a metal foil or a composite current collector. For example, as a metal foil, an aluminum foil can be used. The composite current collector may comprise a polymer material substrate and a metal layer formed on at least one surface of the polymer material substrate. The composite current collector can be formed by forming a metal material (aluminum, an aluminum alloy, nickel, a nickel alloy, titanium, a titanium alloy, silver and a silver alloy, etc.) on a polymer material substrate (such as polypropylene (PP), polyethylene terephthalate (PET), polybutylene terephthalate (PBT), polystyrene (PS), polyethylene (PE), etc.).

In some embodiments, the positive electrode composite material layer comprises a positive electrode active material and an alkali metal compound as shown by formula AₘGOₙ, wherein A represents at least one element selected from Na and K and optionally Li, G represents at least one element selected from Fe, Ni, Co, Mn, Ru, Ir, Sn, Cr, Nb, Mo, V and Ti, m is 1 - 6, and n is 1 - 4.

In some embodiments, the positive electrode active material comprised in the positive electrode composite material layer can be a positive electrode active material for a battery well known in the art.

As an example, the positive electrode active material can be at least one selected from an oxide positive electrode material or a polyanion positive electrode material. These positive electrode active materials may be used alone or in combination of two or more.

Examples of the oxide positive electrode material, can include a layered oxide, such as LiNiO₂, LiCoO₂, LiMnO₂, LiNiₓCo_{y}Mn_{z}O₂ (x + y + z = 1), LiNiₓCo_{y}Al_{z}C₂ (x + y + z = 1), etc., a spinel-type oxide, such as LiMn₂O₄, etc.

Examples of the polyanion positive electrode material can include an olivine-type positive electrode material, such a LiMPO₄ (M is Fe, Co, Ni, Mn, etc.), a positive electrode material having an NASICON structure, such as Li₂M₂(PO₄)₃ (M is Fe, Co, Ni, Mn, Ti, V, etc.), or a silicate, such as Li₂MSiO₄ (M is Fe, Mn), etc.

In some embodiments, the positive electrode composite material layer may also optionally comprise a binder. As an example, the binder may include at least one of polyvinylidene fluoride (PVDF), polytetrafluoroethylene (PTFE), a vinylidene fluoride-tetrafluoroethylene-propylene terpolymer, a vinylidene fluoride-hexafluoropropylene-tetrafluoroethylene terpolymer, a tetrafluoroethylene-hexafluoropropylene copolymer, and a fluorine-containing acrylate resin.

In some embodiments, the positive electrode composite material layer may also optionally comprise a conductive agent. As an example, the conductive agent may include at least one of superconducting carbon, acetylene black, carbon black, Ketjen black, carbon dots, carbon nanotubes, graphene, and carbon nanofibers.

In some embodiments, for example, the positive electrode plate can be prepared as follows: for example, a positive electrode active material and an alkali metal oxide, an conductive agent, a binder and any other components are dispersed in a solvent (e.g., N-methylpyrrolidone) to form a positive electrode slurry; and coating the positive electrode current collector with the positive electrode slurry, followed by the procedures such as drying and cold pressing, so as to obtain the positive electrode plate.

In some other embodiments, the positive electrode plate comprises a positive electrode current collector, a positive electrode active material layer provided on at least one surface of the positive electrode current collector, and an alkali metal oxide layer disposed between the positive electrode current collector and the positive electrode active material layer or on the positive electrode active material layer. The alkali metal oxide is an alkali metal oxide as shown by the formula AₘGOₙ, A represents at least one element selected from Na and K and optionally Li, G represents at least one element selected from Fe, Ni, Co, Mn, Ru, Ir, Sn, Cr, Nb, Mo, V and Ti, m is 1 - 6, and n is 1 - 4.

In these embodiments, the positive electrode current collector, alkali metal oxide, and positive electrode active material can be the same to those in the above embodiment, and repetitive descriptions are omitted here.

In these embodiments, the positive electrode active material layer and the alkali metal oxide layer can also optionally comprise a binder. As an example, the binder may include at least one of polyvinylidene fluoride (PVDF), polytetrafluoroethylene (PTFE), a vinylidene fluoride-tetrafluoroethylene-propylene terpolymer, a vinylidene fluoride-hexafluoropropylene-tetrafluoroethylene terpolymer, a tetrafluoroethylene-hexafluoropropylene copolymer, and a fluorine-containing acrylate resin.

In some embodiments, the positive electrode active material layer and the alkali metal oxide layer can also optionally comprise a conductive agent. As an example, the conductive agent may include at least one of superconducting carbon, acetylene black, carbon black, Ketjen black, carbon dots, carbon nanotubes, graphene, and carbon nanofibers.

In some embodiments, for example, the positive electrode plate can be prepared as follows: for example, a positive electrode active material, an conductive agent, a binder and any other components are dispersed in a solvent (e.g., N-methylpyrrolidone) to form a positive electrode active material slurry; the positive electrode active material slurry is coated onto a positive electrode current collector, and is then subjected to procedures such as drying and cold pressing, so as to obtain the positive electrode active material layer; for example, an alkali metal oxide, an conductive agent, a binder and any other components are dispersed in a solvent (e.g., N-methylpyrrolidone) to form a alkali metal oxide slurry; and then the resulting positive electrode active material layer is coated with the alkali metal oxide slurry, followed by the procedures such as drying and cold pressing, so as to obtain the positive electrode plate. In other embodiments, the alkali metal oxide slurry as obtained above can be coated onto the positive electrode current collector, followed by the procedures such as drying and cold pressing, so as to obtain the alkali metal oxide layer; and then the resulting alkali metal oxide layer is coated with the positive electrode active material slurry as obtained above, followed by the procedures such as drying and cold pressing, so as to obtain the positive electrode plate.

### [Negative electrode plate]

The negative electrode plate comprises a negative electrode current collector and a negative electrode material layer provided on at least one surface of the negative electrode current collector.

As an example, the negative electrode current collector has two surfaces opposite in its own thickness direction, and the negative electrode material layer is provided on either or both of the two opposite surfaces of the negative electrode current collector.

In some embodiments, the negative electrode current collector can be a metal foil or a composite current collector. For example, as a metal foil, a copper foil can be used. The composite current collector may comprise a polymer material substrate and a metal layer formed on at least one surface of the polymer material substrate. The composite current collector can be formed by forming a metal material (copper, a copper alloy, nickel, a nickel alloy, titanium, a titanium alloy, silver and a silver alloy, etc.) on a polymer material substrate (e.g., polypropylene (PP), polyethylene terephthalate (PET), polybutylene terephthalate (PBT), polystyrene (PS), polyethylene (PE), etc.).

In some embodiments, a negative electrode active material for batteries well known in the art can be used in the negative electrode material layer.

As an example, the negative electrode active material may include at least one of the following materials: a carbon material, a metal or nonmetal compound, a coating of the compound and a dopant of the compound, etc. The carbon material comprises at least one selected from graphite, hard carbon and soft carbon, the metal or nonmetal compound comprises at least one selected from oxides, sulphides, selenides and fluorides of silicon, selenium, sulphur, phosphorus, tin, titanium or vanadium, the coating of the compound comprises: a coating obtained by coating the metal or nonmetal compound with graphite, soft carbon or hard carbon, and the dopant of the compound comprises: a dopant obtained by doping the metal or nonmetal compound with at least one element selected from Mg, Ni, Co, and Mn. In some embodiments, the metal or nonmetal compound comprises at least one selected from SiO₂, SiO, SnO₂, TiO₂, SiS₂ and TiS₂. However, the present application is not limited to these materials, and other conventional materials that can be used as negative electrode active materials for batteries can also be used. These negative electrode active materials may be used alone or in combination of two or more.

In some embodiments, the negative electrode material layer may also optionally comprise a binder. The binder may be selected from at least one of a styrene butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA) and carboxymethyl chitosan (CMCS).

In some embodiments, the negative electrode material layer may also optionally comprise a conductive agent. The conductive agent may be selected from at least one of superconductive carbon, acetylene black, carbon black, ketjenblack, carbon dots, carbon nanotubes, graphene, and carbon nanofibers.

In some embodiments, the negative electrode material layer may also optionally comprise other auxiliary agents, such as thickener (e.g., sodium carboxymethyl cellulose (CMC-Na)) and the like.

In some embodiments, a dispersant may also be used in preparing the negative electrode material layer. The dispersant is used to improve the dispersion uniformity and coating property, and can be a commonly used dispersant in the battery field, for example, a polymer dispersant. The polymer dispersant can be a polyvinyl alcohol, a modified polyvinyl alcohol having a functional group other than a hydroxyl group, for example, an acetyl group, a sulfo group, a carboxyl group, a carbonyl group, an amino group, polyvinyl alcohol-based resins modified with various salts, modified with anions or cations, and acetal-modified with aldehydes, or various (meth)acrylic-based polymers, polymers derived from ethylenically unsaturated hydrocarbons, cellulose-based resins, etc., or copolymers thereof, but is not limited to these. The polymer dispersant may be used alone or in combination of two or more.

In some embodiments, the negative electrode plate can be prepared as follows: dispersing the above-mentioned components for preparing the negative electrode plate, such as a negative electrode active material, a conductive agent, a binder and any other components, in a solvent (e.g. deionized water) to form a negative electrode slurry; and coating a negative electrode current collector with the negative electrode slurry, followed by procedures such as drying and cold pressing, so as to obtain the negative electrode plate.

### [Electrolyte]

The electrolyte is between the positive electrode plate and the negative electrode plate and functions for conducting ions. The type of the electrolyte is not specifically limited in the present application, and can be selected according to actual requirements. For example, the electrolyte may be in a liquid state, a gel state or an all-solid state.

In some embodiments, an electrolyte solution is used as the electrolyte. The electrolyte solution comprises an electrolyte salt and a solvent.

In some embodiments, the electrolyte salt may be selected from at least one of lithium hexafluorophosphate, lithium tetrafluoroborate, lithium perchlorate, lithium hexafluoroarsenate, lithium bisfluorosulfonimide, lithium bistrifluoromethanesulfonimide, lithium trifluoromethanesulfonate, lithium difluorophosphate, lithium difluorooxalate borate, lithium dioxalate borate, lithium difluorodioxalate phosphate and lithium tetrafluorooxalate phosphate.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, ethyl methyl sulfone, and diethyl sulfone.

In some embodiments, the electrolyte solution may also optionally comprise an additive. For example, the additive may include a negative electrode film-forming additive and a positive electrode film-forming additive, and may further include an additive that can improve certain performances of the battery, such as an additive that improves the overcharge performance of the battery, or an additive that improves the high temperature or low-temperature performance of the battery.

### [Separator]

In the present application, the lithium ion secondary battery also comprises a separator, the type of the separator is not particularly limited in the present application, and any well known porous-structure separator with good chemical stability and mechanical stability can be selected.

In some embodiments, the material of the separator may be selected from at least one of glass fibers, non-woven fabrics, polyethylene, polypropylene and polyvinylidene fluoride. The separator may be a single-layer film or a multi-layer composite film, and is not limited particularly. When the separator is a multi-layer composite film, the materials in the respective layers may be same or different, which is not limited particularly.

### [Secondary battery]

In some embodiments, the positive electrode plate, the negative electrode plate and the separator can form an electrode assembly by a winding process or a stacking process.

In some embodiments, the lithium ion secondary battery may comprise an outer package. The outer package can be used to encapsulate the above-mentioned electrode assembly and electrolyte.

In some embodiments, the outer package of the lithium ion secondary battery may be a hard shell, for example, a hard plastic shell, an aluminum shell, a steel shell, etc. The outer package of the lithium ion secondary battery may also be a soft bag, for example, a pouch-type soft bag. The material of the soft bag may be plastics, and the examples of plastics may include polypropylene, polybutylene terephthalate, and polybutylene succinate, etc.

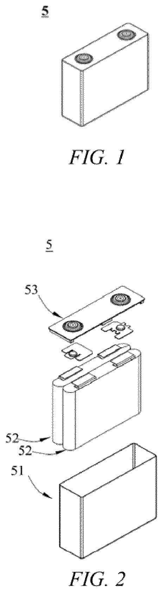

The shape of the lithium ion secondary battery is not particularly limited in the present application, and can be a cylindrical shape, a square shape or any other shape. For example, Fig. 1 shows a lithium ion secondary battery 5 of a square structure as an example.

In some embodiments, referring to Fig. 2, an outer package may comprise a housing 51 and a cover plate 53. Herein, the housing 51 may comprise a bottom plate and side plates connected to the bottom plate, and the bottom plate and the side plates enclose to form an accommodating cavity. The housing 51 has an opening in communication with the accommodating cavity, and the cover plate 53 can cover the opening to close the accommodating cavity. The positive electrode plate, the negative electrode plate and the separator can be subjected to a winding process or a laminating process to form an electrode assembly 52. The electrode assembly 52 is encapsulated in the accommodating cavity. The electrolyte infiltrates the electrode assembly 52. The number of the electrode assemblies 52 contained in the lithium ion secondary battery 5 may be one or more, and can be selected by those skilled in the art according to specific actual requirements.

In some embodiments, a lithium ion secondary battery can be assembled into a battery module, and the number of the lithium ion secondary batteries contained in the battery module may be one or more, and the specific number can be selected by those skilled in the art according to the application and capacity of the battery module.

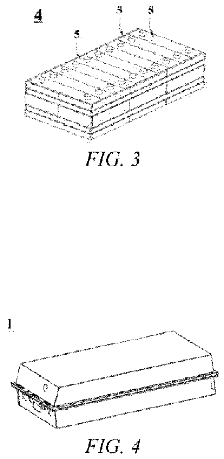

Fig. 3 shows a battery module 4 as an example. Referring to Fig. 3, in the battery module 4, a plurality of secondary batteries 5 may be arranged in sequence in the length direction of the battery module 4. Apparently, the secondary batteries may also be arranged in any other manner. Furthermore, the plurality of secondary batteries 5 may be fixed by fasteners.

Optionally, the battery module 4 may also comprise a housing with an accommodating space, and a plurality of secondary batteries 5 are accommodated in the accommodating space.

In some embodiments, the above battery module may also be assembled into a battery pack, the number of the battery modules contained in the battery pack may be one or more, and the specific number can be selected by those skilled in the art according to the application and capacity of the battery pack.

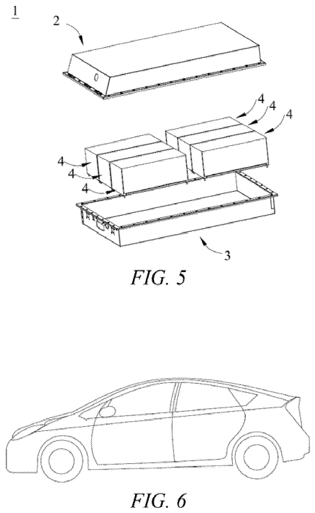

Fig. 4 and Fig. 5 show a battery pack 1 as an example. Referring to Fig. 4 and Fig. 5, the battery pack 1 may comprise a battery case and a plurality of battery modules 4 provided in the battery box. The battery case comprises an upper case body 2 and a lower case body 3, wherein the upper case body 2 can cover the lower case body 3 to form a closed space for accommodating the battery modules 4. A plurality of battery modules 4 may be arranged in the battery case in any manner.

In addition, the present application also provides a power consuming device, comprising the lithium ion secondary battery provided in the present application. The lithium ion secondary battery can be used as a power source of the power consuming device, or as an energy storage unit of the power consuming device. The power consuming device may include a mobile device (e.g., a mobile phone, a laptop computer, etc.), an electric vehicle (e.g., a pure electric vehicle, a hybrid electric vehicle, a plug-in hybrid electric vehicle, an electric bicycle, an electric scooter, an electric golf cart, an electric truck, etc.), an electric train, ship, and satellite, an energy storage system, and the like, but is not limited thereto.

For the power consuming device, the lithium ion secondary battery, battery module or battery pack can be selected according to the usage requirements thereof.

Fig. 6 shows a power consuming device as an example. The power consuming device may be a pure electric vehicle, a hybrid electric vehicle, a plug-in hybrid electric vehicle or the like. In order to meet the requirements of the power consuming device for a high power and a high energy density of a lithium ion secondary battery, a battery pack or a battery module may be used.

As another example, the electrical apparatus may be a mobile phone, a tablet computer, a laptop computer, etc. Such device is generally required to be thin and light, and a lithium ion secondary battery can be used as a power supply.

### Examples

Hereinafter, the examples of the present application will be explained. The examples described below are exemplary and are merely for explaining the present application, and should not be construed as limiting the present application. The examples in which techniques or conditions are not specified are based on the techniques or conditions described in documents in the art or according to the product introduction. The reagents or instruments used therein for which manufacturers are not specified are all conventional products that are commercially available.

### Example 1:

Preparation of positive electrode plate for secondary battery: A positive electrode active material of LiNi_{0.5}Co_{0.2}Mn_{0.3}O₂, an alkali metal oxide of Na₆FeO₄, polyvinylidene fluoride (PVDF), and a conductive agent (carbon black Super P) are mixed at a mass ratio of 88 : 2 : 5 : 5, with N-methylpyrrolidone (NMP) as a solvent, wherein the amount of the solvent is adjusted, such that the slurry is controlled at a viscosity of 3000 - 20000 mPa.s. The slurry is coated on to the positive electrode current collector using a coater. Same is dried at 85°C and then cold pressed, followed by edge-cutting, slicing, slitting, then drying for 4 hours under vacuum conditions at 85°C, and tab welding, to prepare a positive electrode plate for a secondary battery meeting the requirements.

Preparation of negative electrode plate for secondary battery: A negative electrode active material of graphite, a conductive agent of Super-P, a thickener of CMC, and a binder of SBR are added into a solvent of deionized water at a mass ratio of 96.5 : 1.0 : 1.0 : 1.5 and uniformly mixed to prepare a negative electrode slurry The negative electrode slurry is coated onto a current collector of a copper foil and dried at 85°C, followed by edge-cutting, slicing, slitting, then drying for 4 hours under vacuum conditions at 110°C, and tab welding, to prepare a negative electrode plate for a secondary battery meeting the requirements.

Preparation of electrolyte for secondary battery: A mixture of ethylene carbonate (EC), propylene carbonate (PC) and diethyl carbonate (DEC) as a non-aqueous organic solvent, with the mass ratio of the components being EC : PC : DEC = 30 : 30 : 40, and lithium hexafluorophosphate (LiPF₆) as a lithium salt are prepared as an electrolyte of a concentration of 1 M.

Preparation of secondary battery: A 12 µm polypropylene film is used as a separator, the positive electrode plate, separator, and negative electrode plate are stacked in order, such that the separator is disposed in the middle of the negative electrode plate and functions for separation, and then they are wound into a square bare cell having a thickness of 8 mm, a width of 60 mm, and a length of 130 mm. The bare cell is packed into an aluminium foil package bag, dried under vacuum at 75°C for 10 h, filled with the electrolyte, vacuum-packaged and left to stand for 24 h, then charged to 4.5 V at a constant current of 0.1 C (160 mA), then charged at a constant voltage of 4.5 V until the current drops to 0.05 C (80 mA), then discharged to 2.8 V at a constant current of 0.1 C (160 mA), the charging/discharging is repeated 2 times, and finally the cell is charged to 3.8 V at a constant current of 0.1 C (160 mA) to complete the preparation of the secondary battery.

### Example 2:

Preparation of positive electrode plate for secondary battery: A positive electrode active material of LiNi_{0.5}Co_{0.2}Mn_{0.3}O₂, an alkali metal oxide of K₆FeO₄, polyvinylidene fluoride (PVDF), a conductive agent (carbon black Super P) are mixed at a mass ratio of 89 : 1 : 5 : 5, with N-methylpyrrolidone (NMP) as a solvent, wherein the amount of the solvent is adjusted, such that the slurry is controlled at a viscosity of 3000 - 20000 mPa.s. The slurry is coated on to the positive electrode current collector using a spray-coater. Same is dried at 85°C and then cold pressed, followed by edge-cutting, slicing, slitting, then drying for 4 hours under vacuum conditions at 85°C, and tab welding, to prepare a positive electrode plate for a secondary battery meeting the requirements.

Preparation of negative electrode plate for secondary battery: A negative electrode active material of graphite, a conductive agent of Super-P, a thickener of CMC, and a binder of SBR are added into a solvent of deionized water at a mass ratio of 96.5 : 1.0 : 1.0 : 1.5 and uniformly mixed to prepare a negative electrode slurry. The negative electrode slurry is coated onto a current collector of a copper foil and dried at 85°C, followed by edge-cutting, slicing, slitting, then drying for 4 hours under vacuum conditions at 110°C, and tab welding, to prepare a negative electrode plate for a secondary battery meeting the requirements.

Preparation of electrolyte for secondary battery: A mixture of ethylene carbonate (EC), propylene carbonate (PC) and diethyl carbonate (DEC) as a non-aqueous organic solvent, with the mass ratio of the components being EC : PC : DEC = 30 : 30 : 40, and lithium hexafluorophosphate (LiPF₆) as a lithium salt are prepared as an electrolyte of a concentration of 1 M.

Preparation of secondary battery: A 12 µm polypropylene film is used as a separator, the positive electrode plate, separator, and negative electrode plate are stacked in order, such that the separator is disposed in the middle of the negative electrode plate and functions for separation, and then they are wound into a square bare cell having a thickness of 8 mm, a width of 60 mm, and a length of 130 mm. The bare cell is packed into an aluminium foil package bag, dried under vacuum at 75°C for 10 h, filled with the electrolyte, vacuum-packaged and left to stand for 24 h, then charged to 4.5 V at a constant current of 0.1 C (160 mA), then charged at a constant voltage of 4.5 V until the current drops to 0.05 C (80 mA), then discharged to 2.8 V at a constant current of 0.1 C (160 mA), the charging/discharging is repeated 2 times, and finally the cell is charged to 3.8 V at a constant current of 0.1 C (160 mA) to complete the preparation of the secondary battery.

### Example 3:

Preparation of positive electrode plate for secondary battery: A positive electrode active material of LiNi_{0.5}Co_{0.2}Mn_{0.3}O₂, an alkali metal oxide of Li₂Na₄FeO₄, polyvinylidene fluoride (PVDF), and a conductive agent (carbon black Super P) are mixed at a mass ratio of 87.5 : 2.5 : 5 : 5, with N-methylpyrrolidone (NMP) as a solvent, wherein the amount of the solvent is adjusted, such that the slurry is controlled at a viscosity of 3000 - 20000 mPa.s. The slurry is coated on to the positive electrode current collector using a coater. Same is dried at 85°C and then cold pressed, followed by edge-cutting, slicing, slitting, then drying for 4 hours under vacuum conditions at 85°C, and tab welding, to prepare a positive electrode plate for a secondary battery meeting the requirements.

Preparation of negative electrode plate for secondary battery: A negative electrode active material of graphite, a conductive agent of Super-P, a thickener of CMC, and a binder of SBR are added into a solvent of deionized water at a mass ratio of 96.5 : 1.0 : 1.0 : 1.5 and uniformly mixed to prepare a negative electrode slurry. The negative electrode slurry is coated onto a current collector of a copper foil and dried at 85°C, followed by edge-cutting, slicing, slitting, then drying for 4 hours under vacuum conditions at 110°C, and tab welding, to prepare a negative electrode plate for a secondary battery meeting the requirements.

Preparation of electrolyte for secondary battery: A mixture of ethylene carbonate (EC), propylene carbonate (PC) and diethyl carbonate (DEC) as a non-aqueous organic solvent, with the mass ratio of the components being EC : PC : DEC = 30 : 30 : 40, and lithium hexafluorophosphate (LiPF₆) as a lithium salt are prepared as an electrolyte of a concentration of 1 M.

Preparation of secondary battery: A 12 µm polypropylene film is used as a separator, the positive electrode plate, separator, and negative electrode plate are stacked in order, such that the separator is disposed in the middle of the negative electrode plate and functions for separation, and then they are wound into a square bare cell having a thickness of 8 mm, a width of 60 mm, and a length of 130 mm. The bare cell is packed into an aluminium foil package bag, dried under vacuum at 75°C for 10 h, filled with the electrolyte, vacuum-packaged and left to stand for 24 h, then charged to 4.5 V at a constant current of 0.1 C (160 mA), then charged at a constant voltage of 4.5 V until the current drops to 0.05 C (80 mA), then discharged to 2.8 V at a constant current of 0.1 C (160 mA), the charging/discharging is repeated 2 times, and finally the cell is charged to 3.8 V at a constant current of 0.1 C (160 mA) to complete the preparation of the secondary battery.

### Example 4:

Preparation of positive electrode plate for secondary battery: A positive electrode plate for a secondary battery is prepared by the same operation as that in example 2.

Preparation of negative electrode plate for secondary battery: Graphite is mixed with SiO to obtain a mixture, wherein SiO is in an amount of 25 mass% relative to the whole mixture, the resulting mixture is used as a negative electrode active material; the negative electrode active material, a conductive agent of Super-P, a thickener of CMC, and a binder of SBR are added into a solvent of deionized water at a mass ratio of 96.5 : 1.0 : 1.0 : 1.5, and uniformly mixed to prepare a negative electrode slurry. A negative electrode plate for a secondary battery is prepared by the same operation as that in example 2, except the above procedures.

Preparation of electrolyte for secondary battery: An electrolyte having a concentration of 1 M is prepared by the same operation as that in example 2.

Preparation of secondary battery: The preparation of a secondary battery is completed by the same operation as that in example 2.

### Example 5:

Preparation of positive electrode plate for secondary battery: A positive electrode plate for a secondary battery is prepared by the same operation as that in example 2.

Preparation of negative electrode plate for secondary battery: Graphite is mixed with a SiO carbon coating to obtain a mixture, wherein the SiO carbon coating is in an amount of 25 mass% relative to the whole mixture, the mixture is used as a negative electrode active material; the negative electrode active material, a conductive agent of Super-P, a thickener of CMC, and a binder of SBR are added into a solvent of deionized water at a mass ratio of 96.5 : 1.0 : 1.0 : 1.5, and uniformly mixed to prepare a negative electrode slurry. A negative electrode plate for a secondary battery is prepared by the same operation as that in example 2, except the above procedures.

Preparation of electrolyte for secondary battery: An electrolyte having a concentration of 1 M is prepared by the same operation as that in example 2.

Preparation of secondary battery: The preparation of a secondary battery is completed by the same operation as that in example 2.

### Example 6:

Preparation of positive electrode plate for secondary battery: A positive electrode plate for a secondary battery is prepared by the same operation as that in example 2.

Preparation of negative electrode plate for secondary battery: Graphite is mixed with a dopant obtained by doping SiO with magnesium (wherein the amount of magnesium relative to the whole SiO magnesium dopant is 0.1% - 2%) to obtain a mixture, wherein the SiO magnesium dopant is in an amount of 25 mass% relative to the whole mixture, the mixture is used as a negative electrode active material; the negative electrode active material, a conductive agent of Super-P, a thickener of CMC, and a binder of SBR are added into a solvent of deionized water at a mass ratio of 96.5 : 1.0 : 1.0 : 1.5, and uniformly mixed to prepare a negative electrode slurry. A negative electrode plate for a secondary battery is prepared by the same operation as that in example 2, except the above procedures.

Preparation of electrolyte for secondary battery: An electrolyte having a concentration of 1 M is prepared by the same operation as that in example 2.

Preparation of secondary battery: The preparation of a secondary battery is completed by the same operation as that in example 2.

### Example 7:

Preparation of positive electrode plate for secondary battery: A positive electrode active material of LiNi_{0.5}Co_{0.2}Mn_{0.3}O₂, an alkali metal oxide of K₆FeO₄, polyvinylidene fluoride (PVDF), and a conductive agent (carbon black Super P) are mixed at a mass ratio of 89.91 : 0.09 : 5 : 5. A positive electrode plate for a secondary battery is prepared by the same operation as that in example 2, except the above procedures.

Preparation of negative electrode plate for secondary battery: A negative electrode plate meeting a secondary battery is prepared by the same operation as that in example 2.

Preparation of electrolyte for secondary battery: An electrolyte having a concentration of 1 M is prepared by the same operation as that in example 2.

Preparation of secondary battery: The preparation of a secondary battery is completed by the same operation as that in example 2.

### Example 8:

Preparation of positive electrode plate for secondary battery: A positive electrode active material of LiNi_{0.5}Co_{0.2}Mn_{0.3}O₂, an alkali metal oxide of K₆FeO₄, polyvinylidene fluoride (PVDF), and a conductive agent (carbon black Super P) are mixed at a mass ratio of 89.55 : 0.45 : 5 : 5. A positive electrode plate for a secondary battery is prepared by the same operation as that in example 2, except the above procedures.

Preparation of negative electrode plate for secondary battery: A negative electrode plate meeting a secondary battery is prepared by the same operation as that in example 2.

Preparation of electrolyte for secondary battery: An electrolyte having a concentration of 1 M is prepared by the same operation as that in example 2.

Preparation of secondary battery: The preparation of a secondary battery is completed by the same operation as that in example 2.

### Example 9:

Preparation of positive electrode plate for secondary battery: A positive electrode active material of LiNi_{0.5}Co_{0.2}Mn_{0.3}O₂, an alkali metal oxide of K₆FeO₄, polyvinylidene fluoride (PVDF), and a conductive agent (carbon black Super P) are mixed at a mass ratio of 86.4 : 3.6 : 5 : 5. A positive electrode plate for a secondary battery is prepared by the same operation as that in example 2, except the above procedures.

Preparation of negative electrode plate for secondary battery: A negative electrode plate meeting a secondary battery is prepared by the same operation as that in example 2.

Preparation of electrolyte for secondary battery: An electrolyte having a concentration of 1 M is prepared by the same operation as that in example 2.

Preparation of secondary battery: The preparation of a secondary battery is completed by the same operation as that in example 2.

### Example 10:

Preparation of positive electrode plate for secondary battery: A positive electrode active material of LiNi_{0.5}Co_{0.2}Mn_{0.3}O₂, an alkali metal oxide of K₆FeO₄, polyvinylidene fluoride (PVDF), and a conductive agent (carbon black Super P) are mixed at a mass ratio of 81 : 9 : 5 : 5. A positive electrode plate for a secondary battery is prepared by the same operation as that in example 2, except the above procedures.

Preparation of negative electrode plate for secondary battery: A negative electrode plate meeting a secondary battery is prepared by the same operation as that in example 2.

Preparation of electrolyte for secondary battery: An electrolyte having a concentration of 1 M is prepared by the same operation as that in example 2.

Preparation of secondary battery: The preparation of a secondary battery is completed by the same operation as that in example 2.

### Example 11:

Preparation of positive electrode plate for secondary battery: A positive electrode active material of LiNi_{0.5}Co_{0.2}Mn_{0.3}O₂, an alkali metal oxide of K₆FeO₄, polyvinylidene fluoride (PVDF), and a conductive agent (carbon black Super P) are mixed at a mass ratio of 89.955 : 0.045 : 5 : 5. A positive electrode plate for a secondary battery is prepared by the same operation as that in example 2, except the above procedures.

Preparation of negative electrode plate for secondary battery: A negative electrode plate meeting a secondary battery is prepared by the same operation as that in example 2.

Preparation of electrolyte for secondary battery: An electrolyte having a concentration of 1 M is prepared by the same operation as that in example 2.

Preparation of secondary battery: The preparation of a secondary battery is completed by the same operation as that in example 2.

### Example 12:

Preparation of positive electrode plate for secondary battery: A positive electrode active material of LiNi_{0.5}Co_{0.2}Mn_{0.3}O₂, an alkali metal oxide of K₆FeO₄, polyvinylidene fluoride (PVDF), and a conductive agent (carbon black Super P) are mixed at a mass ratio of 80.1 : 9.9 : 5 : 5. A positive electrode plate for a secondary battery is prepared by the same operation as that in example 2, except the above procedures.

Preparation of negative electrode plate for secondary battery: A negative electrode plate meeting a secondary battery is prepared by the same operation as that in example 2.

Preparation of electrolyte for secondary battery: An electrolyte having a concentration of 1 M is prepared by the same operation as that in example 2.

Preparation of secondary battery: The preparation of a secondary battery is completed by the same operation as that in example 2.

### Example 13:

Preparation of positive electrode plate for secondary battery: An alkali metal oxide of Na₆FeO₄ is mixed with polyvinylidene fluoride (PVDF), and a conductive agent (carbon black Super P), with N-methylpyrrolidone (NMP) as a solvent, wherein the amount of the solvent is adjusted, such that the slurry is controlled at a viscosity of 3000-20000 mPa.s. The slurry is coated on to the positive electrode current collector using a coater, to form a alkali metal oxide layer.

Then a positive electrode active material of LiNi_{0.5}Co_{0.2}Mn_{0.3}O₂ is mixed with polyvinylidene fluoride (PVDF), and a conductive agent (carbon black Super P), such that the mass ratio of LiNi_{0.5}Co_{0.2}Mn_{0.3}O₂ to the alkali metal oxide of Na₆FeO₄ coated onto the positive electrode current collector is 88 : 2, with N-methylpyrrolidone (NMP) as a solvent, wherein the amount of the solvent is adjusted, such that the slurry is controlled at a viscosity of 3000 - 20000 mPa.s. The slurry is coated on to the alkali metal oxide layer using a coater.

Same is dried at 85°C and then cold pressed, followed by edge-cutting, slicing, slitting, then drying for 4 hours under vacuum conditions at 85°C, and tab welding, to prepare a positive electrode plate for a secondary battery.

Preparation of negative electrode plate for secondary battery: A negative electrode plate for a secondary battery is prepared by the same operation as that in example 1.

Preparation of electrolyte for secondary battery: An electrolyte having a concentration of 1 M is prepared by the same operation as that in example 1.

Preparation of secondary battery: The preparation of a secondary battery is completed by the same operation as that in example 1.

### Example 14:

Preparation of positive electrode plate for secondary battery: A positive electrode active material of LiNi_{0.5}Co_{0.2}Mn_{0.3}O₂, is mixed with polyvinylidene fluoride (PVDF), and a conductive agent (carbon black Super P), with N-methylpyrrolidone (NMP) as a solvent, wherein the amount of the solvent is adjusted, such that the slurry is controlled at a viscosity of 3000 - 20000 mPa.s. The slurry is coated on to the positive electrode current collector using a coater to form a positive electrode active material layer.

Then an alkali metal oxide of Na₆FeO₄ is mixed with polyvinylidene fluoride (PVDF), and a conductive agent (carbon black Super P), such that the mass ratio of the alkali metal oxide of Na₆FeO₄ to the LiNi_{0.5}Co_{0.2}Mn_{0.3}O₂ coated onto the positive electrode current collector is 2 : 88, with N-methylpyrrolidone (NMP) as a solvent, wherein the amount of the solvent is adjusted, such that the slurry is controlled at a viscosity of 3000 - 20000 mPa.s. The slurry is coated on to the positive electrode active material layer using a coater.

Same is dried at 85°C and then cold pressed, followed by edge-cutting, slicing, slitting, then drying for 4 hours under vacuum conditions at 85°C, and tab welding, to prepare a positive electrode plate for a secondary battery.

Preparation of negative electrode plate for secondary battery: A negative electrode plate meeting a secondary battery is prepared by the same operation as that in example 1.

Preparation of electrolyte for secondary battery: An electrolyte having a concentration of 1 M is prepared by the same operation as that in example 1.

Preparation of secondary battery: The preparation of a secondary battery is completed by the same operation as that in example 1.

### Example 15:

Preparation of positive electrode plate for secondary battery: A positive electrode active material of LiNi_{0.5}Co_{0.2}Mn_{0.3}O₂, an alkali metal oxide of Na₆CoO₄, polyvinylidene fluoride (PVDF), and a conductive agent (carbon black Super P) are mixed at a mass ratio of 88 : 2 : 5 : 5. A positive electrode plate for a secondary battery is prepared by the same operation as that in example 1, except the above procedures.

Preparation of negative electrode plate for secondary battery: A negative electrode plate meeting a secondary battery is prepared by the same operation as that in example 1.

Preparation of electrolyte for secondary battery: An electrolyte having a concentration of 1 M is prepared by the same operation as that in example 1.

Preparation of secondary battery: The preparation of a secondary battery is completed by the same operation as that in example 1.

### Comparative Example 1:

Preparation of positive electrode plate for secondary battery: A positive electrode active material of LiNi_{0.5}Co_{0.2}Mn_{0.3}O₂, polyvinylidene fluoride (PVDF), and a conductive agent (carbon black Super P) are mixed at a mass ratio of 90 : 5 : 5, with N-methylpyrrolidone (NMP) as a solvent, wherein the amount of the solvent is adjusted, such that the slurry is controlled at a viscosity of 3000 - 20000 mPa.s. The slurry is coated on to the positive electrode current collector using a coater. Same is dried at 85°C and then cold pressed, followed by edge-cutting, slicing, slitting, then drying for 4 hours under vacuum conditions at 85°C, and tab welding, to prepare a positive electrode plate for a secondary battery meeting the requirements.

Preparation of negative electrode plate for secondary battery: A negative electrode active material of graphite, a conductive agent of Super-P, a thickener of CMC, and a binder of SBR are added into a solvent of deionized water at a mass ratio of 96.5 : 1.0 : 1.0 : 1.5 and uniformly mixed to prepare a negative electrode slurry. The negative electrode slurry is coated onto a current collector of a copper foil and dried at 85°C, followed by edge-cutting, slicing, slitting, then drying for 4 hours under vacuum conditions at 110°C, and tab welding, to prepare a negative electrode plate for a secondary battery meeting the requirements.

Preparation of electrolyte for secondary battery: A mixture of ethylene carbonate (EC), propylene carbonate (PC) and diethyl carbonate (DEC) as a non-aqueous organic solvent, with the mass ratio of the components being EC : PC : DEC = 30 : 30 : 40, and lithium hexafluorophosphate (LiPF₆) as a lithium salt are prepared as an electrolyte of a concentration of 1 M.

Preparation of secondary battery: A 12 µm polypropylene film is used as a separator, the positive electrode plate, separator, negative electrode plate are stacked in order, such that the separator is disposed in the middle of the negative electrode plate and functions for separation, and then they are wound into a square bare cell having a thickness of 8 mm, a width of 60 mm, and a length of 130 mm. The bare cell is packed into an aluminium foil package bag, dried under vacuum at 75°C for 10 h, filled with the electrolyte, vacuum-packaged and left to stand for 24 h, then charged to 4.5 V at a constant current of 0.1 C (160 mA), then charged at a constant voltage of 4.5 V until the current drops to 0.05 C (80 mA), then discharged to 2.8 V at a constant current of 0.1 C (160 mA), the charging/discharging is repeated 2 times, and finally the cell is charged to 3.8 V at a constant current of 0.1 C (160 mA) to complete the preparation of the secondary battery.

### Comparative Example 2:

Preparation of positive electrode plate for secondary battery: A positive electrode active material of LiNi_{0.5}Co_{0.2}Mn_{0.3}O₂, polyvinylidene fluoride (PVDF), and a conductive agent (carbon black Super P) are mixed at a mass ratio of 90 : 5 : 5, with N-methylpyrrolidone (NMP) as a solvent, wherein the amount of the solvent is adjusted, such that the slurry is controlled at a viscosity of 3000 - 20000 mPa.s. The slurry is coated on to the positive electrode current collector using a coater. Same is dried at 85°C and then cold pressed, followed by edge-cutting, slicing, slitting, then drying for 4 hours under vacuum conditions at 85°C, and tab welding, to prepare a positive electrode plate for a secondary battery meeting the requirements.

Preparation of negative electrode plate for secondary battery: Graphite is mixed with SiO to obtain a mixture, wherein SiO is in an amount of 25 mass% relative to the whole mixture, the resulting mixture is used as a negative electrode active material; the negative electrode active material, a conductive agent of Super-P, a thickener of CMC, and a binder of SBR are added into a solvent of deionized water at a mass ratio of 96.5 : 1.0 : 1.0 : 1.5, and uniformly mixed to prepare a negative electrode slurry. A negative electrode plate for a secondary battery is prepared by the same operation as that in example 2, except the above procedures.

Preparation of electrolyte for secondary battery: A mixture of ethylene carbonate (EC), propylene carbonate (PC) and diethyl carbonate (DEC) as a non-aqueous organic solvent, with the mass ratio of the components being EC : PC : DEC = 30 : 30 : 40, and lithium hexafluorophosphate (LiPF₆) as a lithium salt are prepared as an electrolyte of a concentration of 1 M.

Preparation of secondary battery: A 12 µm polypropylene film is used as a separator, the positive electrode plate, separator, negative electrode plate are stacked in order, such that the separator is disposed in the middle of the negative electrode plate and functions for separation, and then they are wound into a square bare cell having a thickness of 8 mm, a width of 60 mm, and a length of 130 mm. The bare cell is packed into an aluminium foil package bag, dried under vacuum at 75°C for 10 h, filled with the electrolyte, vacuum-packaged and left to stand for 24 h, then charged to 4.5 V at a constant current of 0.1 C (160 mA), then charged at a constant voltage of 4.5 V until the current drops to 0.05 C (80 mA), then discharged to 2.8 V at a constant current of 0.1 C (160 mA), the charging/discharging is repeated 2 times, and finally the cell is charged to 3.8 V at a constant current of 0.1 C (160 mA) to complete the preparation of the secondary battery.

The compositions of the positive electrodes and negative electrodes for secondary batteries in the above examples 1 - 15 and comparative examples 1 - 2 are shown in Table 1 below.

**[Table 1]**

| Classification | Positive electrode active material | Alkali metal oxide | Ratio of the mass of alkali metal oxide relative to the total mass of positive electrode active material and alkali metal oxide | Negative electrode active material |
|---|---|---|---|---|
| Example 1 | LiNi_{0.5}Co_{0.2}Mn_{0.3}O₂ | Na₆FeO₄ | 2.2% | Graphite |
| Example 2 | LiNi_{0.5}Co_{0.2}Mn_{0.3}O₂ | K₆FeO₄ | 1.1% | Graphite |
| Example 3 | LiNi_{0.5}Co_{0.2}Mn_{0.3}O₂ | Li₂Na₄FeO₄ | 2.8% | Graphite |
| Example 4 | LiNi_{0.5}Co_{0.2}Mn_{0.3}O₂ | K₆FeO₄ | 1.1% | Graphite mixed with 25% SiO |
| Example 5 | LiNi_{0.5}Co_{0.2}Mn_{0.3}O₂ | K₆FeO₄ | 1.1% | Graphite mixed with 25% SiO carbon coating |
| Example 6 | LiNi_{0.5}Co_{0.2}Mn_{0.3}O₂ | K₆FeO₄ | 1.1% | Graphite mixed with 25 % SiO doped with magnesium |
| Example 7 | LiNi_{0.5}Co_{0.2}Mn_{0.3}O₂ | K₆FeO₄ | 0.1% | Graphite |
| Example 8 | LiNi_{0.5}Co_{0.2}Mn_{0.3}O₂ | K₆FeO₄ | 0.5% | Graphite |
| Example 9 | LiNi_{0.5}Co_{0.2}Mn_{0.3}O₂ | K₆FeO₄ | 4% | Graphite |
| Example 10 | LiNi_{0.5}Co_{0.2}Mn_{0.3}O₂ | K₆FeO₄ | 10% | Graphite |
| Example 11 | LiNi_{0.5}Co_{0.2}Mn_{0.3}O₂ | K₆FeO₄ | 0.05% | Graphite |
| Example 12 | LiNi_{0.5}Co_{0.2}Mn_{0.3}O₂ | K₆FeO₄ | 11% | Graphite |
| Example 13 | LiNi_{0.5}Co_{0.2}Mn_{0.3}O₂ | Na₆FeO₄ | 2.2% | Graphite |
| Example 14 | LiNi_{0.5}Co_{0.2}Mn_{0.3}O₂ | Na₆FeO₄ | 2.2% | Graphite |
| Example 15 | LiNi_{0.5}Co_{0.2}Mn_{0.3}O₂ | Na₆CoO₄ | 2.2% | Graphite |
| Comparative Example 1 | LiNi_{0.5}Co_{0.2}Mn_{0.3}O₂ | \ | \ | Graphite |
| Comparative Example 2 | LiNi_{0.5}Co_{0.2}Mn_{0.3}O₂ | \ | \ | Graphite mixed with 25% SiO |

### Testing of cycling performance, expansion force and energy density

At 45°C, the secondary batteries of the above Examples 1 - 15 and Comparative Examples 1 - 2 are subjected to the 1 C/1 C cycling test. The charge/discharge voltage range is 2.8 - 4.5V, and when the capacity is decayed to 80% of the specific capacity of the first discharge, the test is stopped and the number of cycles and expansion force are recorded.

In the voltage range of 2.8 V - 4.3 V, the energy of the cell is tested with a current of 1 C, by means of dividing by the weight of the cell to get the energy density.

Relevant parameters for secondary batteries of the above Examples 1 to 15 and Comparative examples 1 to 2 are shown in Table 2 below.

**[Table 2]**

| Classification | Cycling life (number) | EOL cell expansion force (N) | Energy density (Wh/kg) |
|---|---|---|---|
| Example 1 | 2500 | 10000 | 244 |
| Example 2 | 2400 | 7000 | 244.5 |
| Example 3 | 2700 | 8000 | 243.8 |
| Example 4 | 2000 | 20000 | 259 |
| Example 5 | 2200 | 18000 | 259 |
| Example 6 | 2300 | 17000 | 259 |
| Example 7 | 2100 | 9000 | 245 |
| Example 8 | 2200 | 8000 | 245 |
| Example 9 | 2700 | 6500 | 258 |
| Example 10 | 2600 | 6000 | 254 |
| Example 11 | 1800 | 11000 | 245 |
| Example 12 | 1500 | 10000 | 250 |
| Example 13 | 2500 | 10000 | 244 |
| Example 14 | 2500 | 10000 | 244 |
| Example 15 | 2500 | 10000 | 253 |
| Comparative Example 1 | 1200 | 30000 | 245 |
| Comparative Example 2 | 800 | 60000 | 260 |

According to the above results, it can be seen that in Examples 1 to 15, the positive electrode composite material for forming a positive electrode comprises an alkali metal oxide, or the positive electrode comprises an alkali metal oxide layer formed from an alkali metal oxide, and the technical effects of a low expansion force of the cell, a high cycling life, and excellent energy density are obtained.

In contrast, in Comparative Examples 1 and 2, since the positive electrode does not comprises an alkali metal oxide, the expansion force of the cell is significantly higher than that of the Examples, and the cycling life is also poor.

It should be noted that the present application is not limited to the above embodiments. The above embodiments are exemplary only, and any embodiment that has substantially same constitutions as the technical ideas and has the same effects within the scope of the technical solution of the present application falls within the technical scope of the present application. In addition, without departing from the gist of the present application, various modifications that can be conceived by those skilled in the art to the embodiments, and other modes constructed by combining some of the constituent elements of the embodiments also fall within the scope of the present application.

## Claims

1. A positive electrode composite material for a lithium ion secondary battery, **characterized by**
comprising a positive electrode active material and an alkali metal oxide as shown by formula AₘGOₙ, wherein A represents at least one element selected from Na and K and optionally Li, G represents at least one element selected from Fe, Ni, Co, Mn, Ru, Ir, Sn, Cr, Nb, Mo, V and Ti, m is 1 - 6, and n is 1 - 4.

2. The positive electrode composite material according to claim 1, **characterized in that**
the alkali metal oxide is selected from at least one of Na₆FeO₄, K₆FeO₄, Na₆CoO₄, K₆CoO₄, Li₂Na₄FeO₄ and Li₂K₄FeO₄.

3. The positive electrode composite material according to claim 1 or 2, **characterized in that**
relative to a total of 100 wt% of the positive electrode active material and the alkali metal oxide, the alkali metal oxide has a content of 0.1 wt% - 10 wt%, preferably 0.5 wt% - 4 wt%.

4. A positive electrode for a lithium ion secondary battery, **characterized by** comprising a positive electrode composite material according to any one of claims 1 - 3.

5. A positive electrode for a lithium ion secondary battery, **characterized by** comprising:
a positive electrode current collector, a positive electrode active material layer comprising a positive electrode active material, and an alkali metal oxide layer comprising an alkali metal oxide, wherein
the alkali metal oxide is shown by formula AₘGOₙ, wherein A represents at least one element selected from Na and K and optionally Li, G represents at least one element selected from Fe, Ni, Co, Mn, Ru, Ir, Sn, Cr, Nb, Mo, V and Ti, m is 1 - 6, and n is 1 - 4.

6. The positive electrode for a lithium ion secondary battery according to claim 5, **characterized in that**
the alkali metal oxide is selected from at least one of Na₆FeO₄, K₆FeO₄, Na₆CoO₄, K₆CoO₄, Li₂Na₄FeO₄ and Li₂K₄FeO₄.

7. The positive electrode for a lithium ion secondary battery according to claim 5 or 6, **characterized in that**
the alkali metal oxide layer is disposed between the positive electrode current collector and the positive electrode active material layer, or on the positive electrode active material layer.

8. The positive electrode for a lithium ion secondary battery according to any one of claims 5-7, **characterized in that**
relative to a total of 100 wt% of the positive electrode active material and the alkali metal oxide, the alkali metal oxide has a content of 0.1 wt% - 10 wt%, preferably 0.5 wt% - 4 wt%.

9. A lithium ion secondary battery, **characterized by**
comprising a positive electrode for a lithium ion secondary battery according to any one of claims 4-8 and a negative electrode.

10. The lithium ion secondary battery according to claim 9, **characterized in that**
the negative electrode comprises a negative electrode active material, wherein
the negative electrode active material comprises at least one selected from a carbon material, a metal or a nonmetal compound and a coating of the compound and a dopant of the compound.

11. The lithium ion secondary battery according to claim 10, **characterized in that**
the carbon material comprises at least one selected from graphite, hard carbon and soft carbon,
the metal or nonmetal compound comprises at least one selected from oxides, sulphides, selenides and fluorides of silicon, selenium, sulphur, phosphorus, tin, titanium or vanadium,
the coating of the compound comprises: a coating obtained by coating the metal or nonmetal compound with graphite, soft carbon or hard carbon, and
the dopant of the compound comprises: a dopant obtained by doping the metal or nonmetal compound with at least one element selected from Mg, Ni, Co, and Mn.

12. The lithium ion secondary battery according to claim 10 or 11, **characterized in that**
the metal or nonmetal compound comprises at least one selected from SiO₂, SiO, SnO₂, TiO₂, SiS₂ and TiS₂.

13. A power consuming device, **characterized by**
comprising a lithium ion secondary battery according to any one of claims 9 - 12.
